# EUROPEAN PATENT APPLICATION

(11) **EP 4 417 034 A1**
(43) Date of publication of application: **21.08.2024**
(21) Application number: 24155722.2
(22) Date of filing: 05.02.2024
(51) Int. Cl.: A01D 46/26

(54) **BEATING APPARATUS, PARTICULARLY FOR BEATING OLIVES AND THE LIKE**

(30) Priority: 14.02.2023 IT 202300002442
(71) Applicant: Zanon S.R.L., 35011 Campodarsego PD (IT)
(72) Inventor: ZANON, Franco, 35011 CAMPODARSEGO PD (IT)
(74) Representative: Modiano, Micaela Nadia

(57) **Abstract**

A beating apparatus (10), particularly for beating olives and the like, which comprises an elongated handle (11) provided, at a working end (12) thereof, with a supporting body (13) to which two laterally adjacent oscillating sectors (14) provided with beating rods (15) are articulated, the oscillating sectors (14) being connected to the supporting body (13) so that they can oscillate by means of respective pivots (16), and being connected in a kinematic chain to motor means (17); the kinematic chain comprises, for each one of the oscillating sectors (14), an articulated arm (18) in series with a linkage element (19) which in turn is articulated to a common crank element (20) supported by the supporting body (13) and connected to the motor means (17).

## Description

The present invention relates to a beating apparatus, particularly for beating olives and the like.

Beating is an operation known since forever, and its purpose is to cause fruit to fall from a plant to the ground so it can be gathered.

Beating methods generally involve an operation of agitating the branches of the plant in order to cause its fruits to fall off.

Such agitation is executed with the aid of equipment which can be simple sticks or rakes, or adapted apparatuses, like modem beaters.

These, at the working end of an elongated handle, have devices equipped with rods moved by a motor.

The operator inserts the moving rods between the branches of the plant and the rods shake them, and optionally strike them, in so doing making the fruits fall off.

Nowadays several types of beating apparatuses are known which in general have, at the working end thereof, an elongated handle, a pair of comb-shaped oscillating sectors which are pivoted symmetrically on opposite sides of the working end thereof.

Motor means actuate the symmetric oscillation of the oscillating sectors, which, when they are inserted between the branches of a plant, shake them and, by virtue of their comb shape, perform a combing operation of the branches, to the advantage of a rapid and efficacious beating of the fruits.

In a currently known model of beating apparatus, such motor means comprise an electric motor supported at the end of the handle that lies opposite to its working end, and a mechanical transmission which, passing inside the handle, functionally connects the motor to a piston device which actuates the symmetric oscillation of the oscillating sectors.

Although much appreciated nowadays, this apparatus has some aspects that show room for improvement.

In the field of beating, the need is felt for apparatuses that allow an efficacious shaking of the branches while simultaneously avoiding as far as possible any damage to those branches owing to friction or to percussion.

One solution known today consists of a beating apparatus which comprises:
- an elongated handle provided, at a working end thereof, with a body adapted to support two laterally adjacent and substantially aligned oscillating sectors which are provided with beating rods,
- two linkage elements which functionally interconnect a crank element with the adjacent longitudinal ends of the oscillating sectors, in order to impart an oscillating motion to them.

The crank element is actuated by an electric motor which is supported by a supporting body.

This beating apparatus enables an efficacious shaking of the branches on which it acts, while avoiding an antagonistic action of the beating rods by virtue of their out-of-phase oscillatory movement, ensured by the actuation by means of the two linkage elements which are moved simultaneously by the crank element.

However, it could be improved, in particular in order to meet the need for compactness and structural simplicity which is always felt in the field of beating apparatuses, so as to offer better manageability during use, and greater solidity and therefore endurance.

The aim of the present invention is to provide a beating apparatus, particularly for olives, in which the operating position can be modified as a function of the requirements of the users.

Within this aim, an object of the invention is to provide a beating apparatus that is compact and functionally more versatile than the apparatuses of the prior art from the point of view of positions of use.

Another object of the invention is to provide a beating apparatus that is simple and easy to use, and which can be produced at relatively low cost.

This aim and these and other objects which will become better apparent hereinafter are achieved by a beating apparatus, particularly for beating olives and the like, which comprises an elongated handle provided, at a working end thereof, with a supporting body to which two laterally adjacent coplanar oscillating sectors provided with beating rods are articulated, said oscillating sectors being connected to said supporting body so that they can oscillate by means of respective pivots, and being connected in a kinematic chain to motor means, said apparatus being characterized in that said kinematic chain comprises, for each one of said oscillating sectors, an articulated arm in series with a linkage element which in turn is articulated to a common crank element supported by said supporting body and connected to said motor means.

Further characteristics and advantages of the invention will become better apparent from the detailed description that follows of a preferred, but not exclusive, embodiment of the beating apparatus according to the invention, which is illustrated for the purposes of non-limiting example in the accompanying drawings wherein:

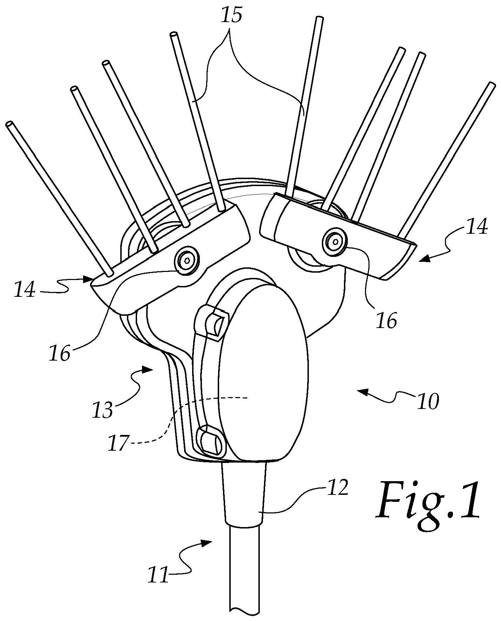

- Figure 1 is a front elevation view of the outside of a beating apparatus according to the invention;

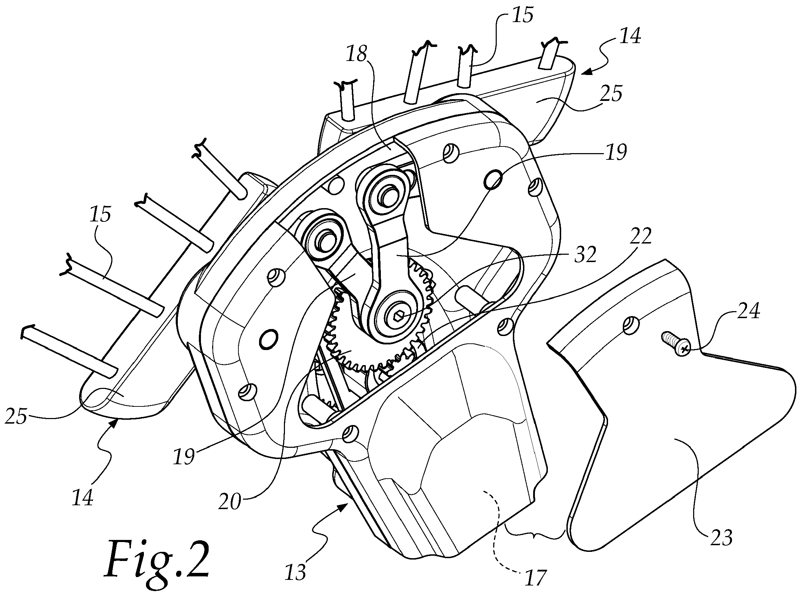

- Figure 2 shows the apparatus of the previous figure, partially open;
- Figure 3 shows the beating apparatus according to the invention, open in a first operating position;
- Figure 4 is a partially exploded view of the beating apparatus according to the invention, open in a second operating position;

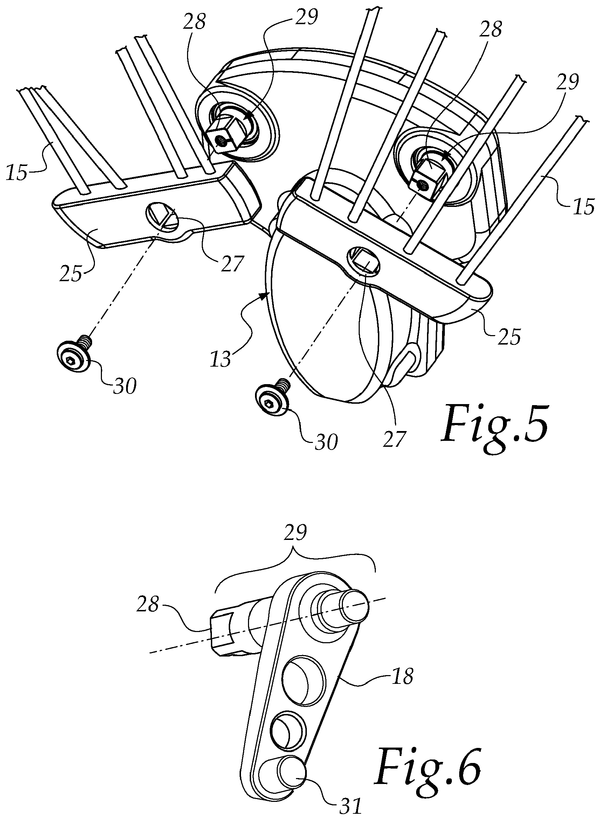

- Figure 5 is an exploded view of the oscillating sectors and the supporting body which are part of the apparatus according to the invention in a mutual position that corresponds to the first operating position;
- Figure 6 is a perspective view of a first linkage which is part of the apparatus according to the invention;

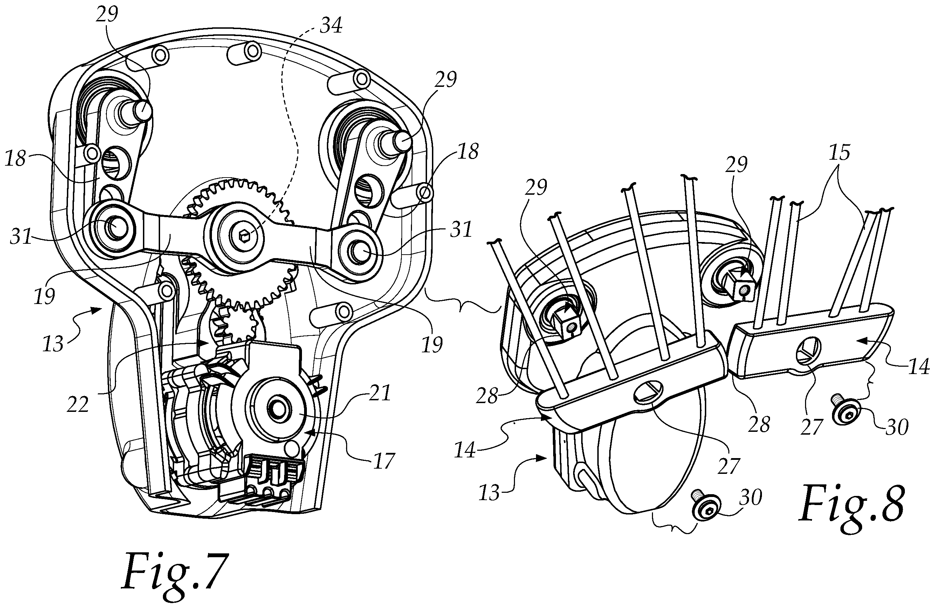

   Figure 7 shows the beating apparatus according to the invention, open in a second operating position;
- Figure 8 is an exploded view of the oscillating sectors and the supporting body which are part of the apparatus according to the invention in a mutual position that corresponds to the second operating position;
- Figures 9 and 10 show, for comparison, the two operating positions of the apparatus according to the invention.

With reference to the figures, the reference number 10 generally indicates a beating apparatus, particularly for beating olives and the like, which comprises an elongated handle 11, which is provided, at a working end 12 thereof, with a box-like supporting body 13, to which two laterally adjacent oscillating sectors 14 provided with beating rods 15 are articulated.

The oscillating sectors are connected to the supporting body 13 so that they can oscillate by way of respective pivots 16 and are connected in a kinematic chain to motor means 17.

Advantageously, the kinematic chain comprises, for each one of the oscillating sectors 14, an articulated arm 18 in series with a linkage element 19 which in turn is articulated to a common crank element 20 supported by the supporting body 13 and connected to the motor means 17.

Conveniently, the crank element 20 is connected to the motor means 17, preferably an electric motor 21, with the interposition of a speed reduction unit 22, for example a gear train or a conical pair.

The crank element 20 can be incorporated in the speed reduction unit 22, and can be constituted by a gearwheel.

The supporting body is made of robust plastic material, is load-bearing and is provided with portions 23 that can be opened or are constituted by whole half-shells, by means of screw connections 24, in order to access the mechanical elements internally.

Advantageously, each oscillating sector 14 is comb-shaped and is made up of a bracket 25 to which the end of a series of rods 15 is fixed.

The bracket 25 has, in a central region of its extension, a through hole 27 for the insertion, by shape mating, of an end 28 of a first coupling pivot 29 which extends monolithically from the corresponding end of the articulated arm 18.

The first pivot 29 can rotate with respect to the supporting body 13 through which it passes.

The shape mating can be, for example, square, hexagonal, cross-shaped, or equivalent.

The oscillating sector 14 is coupled integrally with the articulated arm 18.

Each bracket 25 is extractable from its first pivot 29, in order to assume different angular mating positions as a function of what is allowed by the shape matings.

A screw element 30 is axially coupled to the first pivot 29 in order to reversibly fix the oscillating sector 14, which is located externally to the supporting body 13, on the opposite side of the kinematic movement mechanism.

The other end of the first linkage element 18 is provided monolithically with a second pivot 31 into which a corresponding first perforated end 32 of the linkage element 19 is inserted with rotary coupling.

A second perforated end 33 of the linkage element 19 is rotatably coupled to a common pivot 34 of the crank element 20.

Each linkage element 19 has a rotary coupling with respect to the pivot 34 of the crank 20.

The mutual arrangement of the components is such that the axes of rotation of the crank 20 and of the oscillating sectors 14 define a region in which the articulated arms 18 and linkage elements 19 can be selectively arranged in a first operating position, with reference to the accompanying drawings, with the articulated arms 18 in a substantially horizontal arrangement and the linkage elements 19 in a substantially vertical arrangement.

A second operating position can also be selected, with reference to the accompanying drawings, with the articulated arms 18 arranged in a substantially vertical arrangement and the linkage elements 19 in a substantially horizontal arrangement.

The total distance between the axes of rotation of the pairs composed of articulated arms 18 and linkage elements 19 is greater than the distance between the axes of each corresponding oscillating sector 14 and the nearest position of the crank pivot 32 during its working rotation.

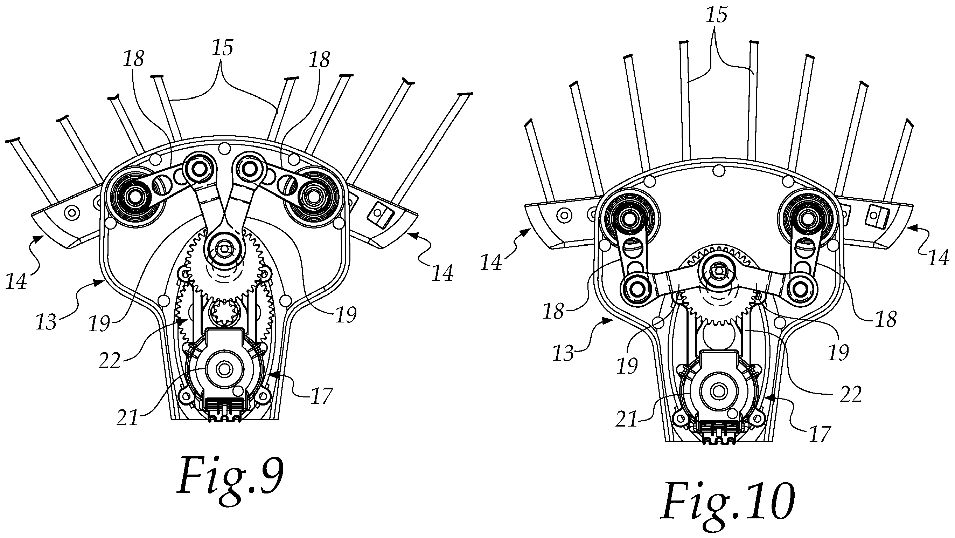

As mentioned, the apparatus according to the invention can place the kinematic components in two operating arrangements, one as illustrated in Figure 9 wherein the oscillating sectors 14 execute an alternating movement of mutual approach and spacing apart with out-of-phase movement, and the other as illustrated in Figure 10 wherein the oscillating sectors execute a movement in which they both oscillate in the same manner from one end of the supporting body 13 to the other.

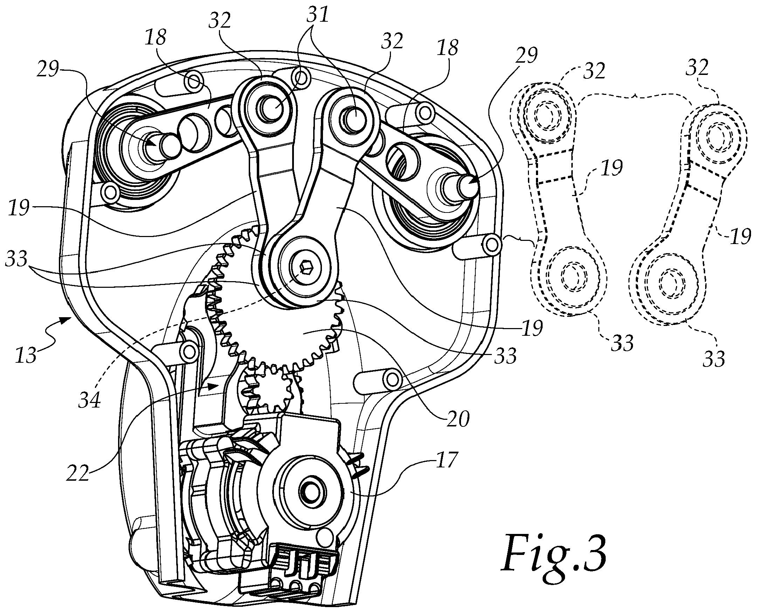

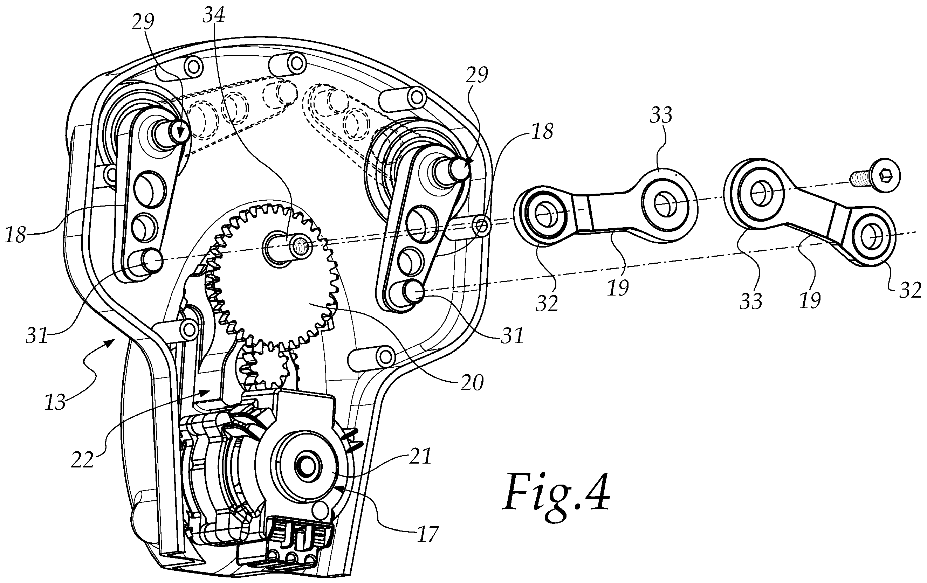

The steps of changing the placement are illustrated in Figures 3 and 4, in which it can be seen that the linkage elements 19 are extracted from the couplings and the articulated arms 18 are rotated from a position of substantially vertical arrangement to a substantially horizontal arrangement or conversely.

The linkage elements 19 are in turn rotated from a substantially vertical arrangement to a substantially horizontal arrangement or conversely.

The oscillating sectors 14 are shifted angularly, by extracting them from the pivots 29 and re-inserting them with shape mating in the corresponding hole 27.

It has thus been observed that the aim and objects of the present invention have been achieved by providing a beating apparatus, particularly for olives, in which the operating position can be modified as a function of the requirements of the users between two arrangements for movement of the oscillating sectors that execute the beating.

The modification can be performed in a simple manner directly by the user by partially opening the supporting body and acting on the linkages and without further addition.

The apparatus is compact and functionally more versatile than current apparatuses.

The arrangement with the oscillating sectors completely outside the supporting body has the additional advantage that the mechanical parts are protected completely from dust.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102023000002442 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A beating apparatus (10), particularly for beating olives and the like, which comprises an elongated handle (11) provided, at a working end (12) thereof, with a supporting body (13) to which two laterally adjacent oscillating sectors (14) provided with beating rods (15) are articulated, said oscillating sectors (14) being connected to said supporting body (13) so that they can oscillate by means of respective pivots (16), and being connected in a kinematic chain to motor means (17), said apparatus (10) being **characterized in that** said kinematic chain comprises, for each one of said oscillating sectors (14), an articulated arm (18) in series with a linkage element (19) which in turn is articulated to a common crank element (20) supported by said supporting body (13) and connected to said motor means (17).

2. The beating apparatus according to claim 1, **characterized in that** said crank element (20) is connected to said motor means (17) with the interposition of a speed reduction unit (22).

3. The beating apparatus according to claim 1, **characterized in that** said supporting body (13) is load-bearing and is provided with portions (23) that can be opened or are constituted by whole half-shells, by means of screw connections (24), in order to access the mechanical elements internally.

4. The beating apparatus according to one or more of the preceding claims, **characterized in that** each oscillating sector (14) is comb-shaped and comprises a bracket (25) to which the end of a series of rods (15) is fixed, said bracket (25) having, in a central region of its extension, a through hole (27) for the insertion, by shape mating, of an end (28) of a first coupling pivot (29) which extends monolithically from the corresponding end of the articulated arm (18), said first pivot (29) being rotatable with respect to the supporting body (13) through which it passes.

5. The beating apparatus according to one or more of the preceding claims, **characterized in that** said shape mating may be square, hexagonal, cross-shaped, or equivalent, such that said oscillating sector (14) is integral with said articulated arm (18), while said first pivot (29) is rotatable with respect to said supporting body (13).

6. The beating apparatus according to one or more of the preceding claims, **characterized in that** each said bracket (25) is extractable from its first pivot (29), in order to assume different angular mating positions as a function of what is allowed by the shape matings.

7. The beating apparatus according to one or more of the preceding claims, **characterized in that** a screw element (30) is axially coupled to the first pivot (29) in order to reversibly fix said oscillating sector (14), which is located externally to said supporting body (13), on the opposite side of the kinematic movement mechanism.

8. The beating apparatus according to one or more of the preceding claims, **characterized in that** the other end of said articulated arm (18) is provided monolithically with a second pivot (31) into which a corresponding first perforated end (32) of said linkage element (19) is inserted with rotary coupling, a second perforated end (33) of said linkage element (19) being rotatably coupled to a common pivot (34) of said crank element (20).

9. The beating apparatus according to one or more of the preceding claims, **characterized in that** each linkage element (19) has a rotary coupling with respect to said common pivot (34) of said crank (20).

10. The beating apparatus according to one or more of the preceding claims, **characterized in that** the mutual arrangement of the components is such that the axes of rotation of said crank (20) and of said oscillating sectors (14) define a region in which said articulated arms (18) and linkage elements (19) can be selectively arranged in a first operating position with said articulated arms (18) in a substantially horizontal arrangement and said linkage elements (19) in a substantially vertical arrangement or, as an alternative, a second operating position with said articulated arms (18) arranged in a substantially vertical arrangement and linkage elements 19 in a substantially horizontal arrangement.

11. The beating apparatus according to one or more of the preceding claims, **characterized in that** the distance between the axes of rotation of the pairs of articulated arms (18) and linkage elements (19) is greater than the distance between the axes of each corresponding said oscillating sector (14) and the nearest position of said crank pivot (32) during its working rotation.
